# EUROPEAN PATENT APPLICATION

(11) **EP 2 871 602 A1**
(43) Date of publication of application: **13.05.2015**
(21) Application number: 14192648.5
(22) Date of filing: 11.11.2014
(51) Int. Cl.: G06Q 10/06

(54) **Report data management server, report data management program, and report data management device**

(30) Priority: 11.11.2013 JP 2013232806
(71) Applicant: IPS Co., Ltd., Osaka 530-0011 (JP)
(72) Inventor: Akita, Toshifumi, Osaka-shi, Osaka 530-0011 (JP)
(74) Representative: Grünecker Patent- und Rechtsanwälte PartG mbB

(57) **Abstract**

A report data management server includes a report data storing unit storing organization data on an organization constituted by a plurality of elements, and report data produced within the organization such that the organization data and the report data are associated with each other, receives a request for supply of report data containing identification information of an element from a user terminal receiving selection of the element from a user based on hierarchical display of the plurality of elements, extracts from the report data storing unit report data corresponding to identification information contained in the request for supply (information based on which the element is uniquely identified) in accordance with reception of the request for supply, and supplies the extracted report data to the user terminal.

## Description

### BACKGROUND

### Technical Field

The present invention relates to a report data management server which is a server for operation of ERP, and provides various types of data via a communication network in accordance with a request issued from a user terminal used by a user. The present invention further relates to a report data management program incorporated in this report data management server.

### Related Art

Package software called ERP (Enterprise Resource Planning) has been the mainstream software used for building core business systems in enterprises. An increasing number of these core business systems containing ERP (enterprise resource planning systems, or ERP systems) are built on relational databases. The principal objectives of application programs designed for the systems are often focused on business processing, wherefore the systems are generally used with no primary attention given to reports output.

Under these circumstances, various data warehouse systems offering complementary functions for the core business systems have been proposed for the purpose of processing a large volume of business data at high speed, analyzing business data in various aspects, and outputting reports (for example, see JP 2002-312208 A).

### SUMMARY

These systems provided for managing reports or other information manage various types of reports, and further manage a considerable amount of report data. Accordingly, it is highly demanded to develop such a technology which supplies data desired by a user by easy processing without the necessity of complicated operation for selection.

It is an object of the present invention to provide a technology capable of solving the aforementioned problems, and providing data desired by a user by simplified processing in a business system (ERP system) providing information on reports.

A report data management server according to the present invention is a server for operation of ERP, and provides report data produced for each business affair in a business process to a user terminal via a communication network in accordance with a request issued from the user terminal used by a user. The report data management server includes: a report data storing unit storing organization data on an organization constituted by a plurality of elements, and report data produced within the organization such that the organization data and the report data are associated with each other; a supply request receiving unit receiving a request for supply of report data containing identification information of an element from the user terminal receiving selection of the element from the user based on hierarchical display of the plurality of elements; an extracting unit extracting from the report data storing unit report data corresponding to the identification information contained in the request for supply in accordance with reception of the request for supply by the supply request receiving unit; and a supplying unit supplying the report data extracted by the extracting unit to the user terminal.

This constitution provides data desired by the user by simplified processing in a business system providing information on reports.

The user terminal may be configured to include: an organization information storing unit storing organization information which is information about the organization, and contains a hierarchical relationship between the plurality of elements; a displaying unit displaying the elements on a display screen of a display device in a mode corresponding to the hierarchical relationship; a specifying unit specifying an element selected by the user from the elements displayed by the displaying unit in accordance with operation by the user; and a transmitting unit transmitting a request for supply of report data containing identification information about the element specified by the specifying unit. The supply request receiving unit may be configured to receive the request for supply transmitted from the transmitting unit of the user terminal.

The displaying unit of the user terminal may be configured to display report data supplied by the supplying unit in a mode in accordance with a specified state of the element by the specifying unit.

The displaying unit of the user terminal may be configured to display an element having a predetermined hierarchical relationship with the element specified by the specifying unit.

The displaying unit of the user terminal may be configured to close display of an element having the predetermined hierarchical relationship with a re-selected element which corresponds to the element specified by the specifying unit and again selected by the user.

The predetermined hierarchical relationship may be configured to be a relationship which sets the element specified by the specifying unit to an upper class element.

The organization information storing unit of the user terminal may be configured to store information about a plurality of organizations. The specifying unit of the user terminal may be configured to specify an organization selected by the user from the plurality of organizations based on operation by the user. The displaying unit of the user terminal may be configured to display the elements of the organization specified by the specifying unit of the user terminal in a mode corresponding to the hierarchical relationship.

The report data management server may be configured to further include a deriving unit deriving information of a type corresponding to the report data extracted by the extracting unit when the request for supply contains type information indicating the type of the information. The supplying unit may be configured to supply to the user terminal information derived by the deriving unit.

A report data management program according to the present invention allows operation of ERP, and allows a report data management server to provide report data via a communication network in accordance with a request issued from a user terminal used by a user. Under the program the report data management server which includes a report data storing unit storing organization data on an organization constituted by a plurality of elements, and report data produced within the organization such that the organization data and the report data are associated with each other executes: a supply request receiving process receiving a request for supply of report data containing identification information of an element from the user terminal receiving selection of the element from the user based on hierarchical display of the plurality of elements; an extracting process extracting from the report data storing unit report data corresponding to the identification information contained in the request for supply in accordance with reception of the request for supply in the supply request receiving process; and a supplying process supplying the report data extracted in the extracting process to the user terminal.

A report data management device according to the present invention is a device for operation of ERP, and provides report data produced for each business affair in a business process in accordance with a request from a user. The device includes: a report data storing unit storing organization data on an organization constituted by a plurality of elements, and report data produced within the organization such that the organization data and the report data are associated with each other; a displaying unit displaying the elements in a hierarchical manner on a display screen of a display device; a specifying unit specifying an element selected by the user from the elements displayed by the displaying unit in accordance with operation by the user; and an extracting unit extracting from the report data storing unit report data corresponding to an element specified by the specifying unit. The displaying unit displays report data extracted by the extracting unit.

The present invention allows supply of data desired by a user by simplified processing in a business system providing information on reports.

### BRIEF DESCRIPTION OF DRAWINGS

FIG. 1 is a block diagram illustrating a constitution example of a report inquiry system;
FIG. 2 is a block diagram illustrating a constitution example of a report data management server;
FIG. 3 is a block diagram illustrating a constitution example of a user terminal;
FIG. 4 is a flowchart showing an example of a voucher data supply process;
FIG. 5 is a figure illustrating an example of a menu screen;
FIG. 6 is a figure illustrating an example of a voucher search screen;
FIG. 7 is a flowchart showing an example of a search condition receiving process;
FIG. 8 is a figure illustrating an example of a voucher search screen;
FIG. 9 is a figure illustrating an example of an organization chart display screen;
FIG. 10 is a figure illustrating another example of the organization chart display screen; and
FIG. 11 is a figure illustrating an example of a list display screen.

### DETAILED DESCRIPTION

An embodiment according to the present invention is hereinafter described with reference to the drawings.

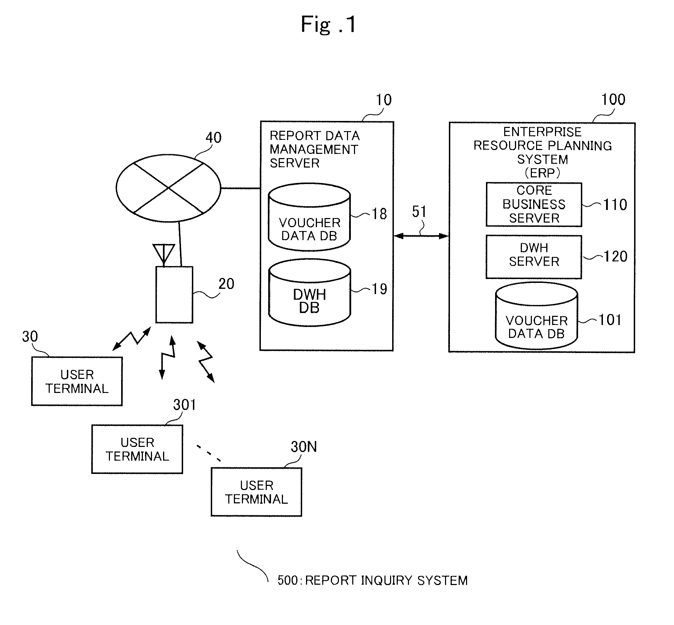

FIG. 1 is a block diagram showing a constitution example of a report inquiry system 500 according to the embodiment of the present invention. As illustrated in FIG. 1, the report inquiry system 500 includes a server 10 (hereinafter referred to as "server 10"), a relay 20, a plurality of user terminals 30, 301 to 30N (N: arbitrary positive integer), and an enterprise resource planning system 100.

The server 10 is connected with each of the user terminals 30, 301 to 30N via a communication network 40 such as the Internet, and the relay 20. The server 10 is connected with the enterprise resource planning system 100 via a communication network 51 such as a LAN (Local Area Network) and a dedicated communication line. The user terminals 30, 301 to 30N may be configured to be either communicable with each other via a report data management server, or incommunicable with each other.

The enterprise resource planning system 100 includes a core business server 110, a data warehouse server (DWH server) 120, and a voucher data DB (database) 101.

The enterprise resource planning system 100 performs functions as an enterprise resource planning system by communicating with (transmitting and receiving various types of information to and from) the server 10 as necessary. Known technologies are applied to the core business server 110 and others included in the enterprise resource planning system 100.

It is assumed that the core business server 110 and the DWH server 120 are connected with each other via a dedicated communication line.

The core business server 110 is a server managed by a manager of the report inquiry system 500, for example, and performs various types of functions for managing report data on various types of business affairs (such as creation, update, and saving of information). The core business server 110 is constituted by an ordinary information processing device equipped with an OS (Operating System) and a relational DB.

The term "report" in this context is a general term referring to books, vouchers and the like. Books herein are materials where items concerning receipts and disbursements of money and articles are entered, while vouchers herein are data based on which books are created, and are evidences for business transactions or the like. Discussed in this embodiment is an example where the core business server 110 handles only voucher data as report data.

The core business server 110 executes various types of processes under a business application program. Examples of the business application program herein include a sales task management program, a purchase task management program, a production management program, a financial accounting management program, and a managerial accounting management program.

The DWH server 120 is a server managed by a system manager of this system, for example, and performs various types of functions for realizing a data warehouse. The data warehouse in this context refers to a system which analyzes relevance between respective items in business data such as report data accumulated in the time-series order. The DWH server 120 has a function of converting files in CSV (Comma Separated Values) format transferred from the core business server 110 into data in a predetermined data format, for example, and has a function of registering respective types of the converted data in predetermined storing areas. The DWH server 120 may be configured to extract data corresponding to respective storing areas from data in the state of CSV format without converting data format.

The voucher data DB 101 is a storage medium which stores various types of report data collected, sorted, or processed in other ways by various types of information processing under various types of business application programs (programs stored in a not-shown business application program DB included in the enterprise resource planning system 100). For example, voucher data corresponding to order acceptance slips in the voucher data DB 101 is associated with order acceptance slip header information, order acceptance slip specification information, delivery date schedule and the like, and stored in a structure searchable based on keys such as slip numbers.

The core business server 110 has a function of converting various types of data stored in the voucher data DB 101 into data in CSV format in accordance with predetermined extraction conditions, and transmitting the converted data to the server 10. According to this embodiment, the core business server 110 transfers data files converted into CSV format using FTP (File Transfer Protocol) to the server 10.

The server 10 is a server for operation of ERP, and provides various types of data via a communication network in accordance with a request from user terminals 30, 301 to 30N used by a user. The server 10 is constituted by an information processing device such as a WWW server, and managed by the system manager of the report inquiry system 500.

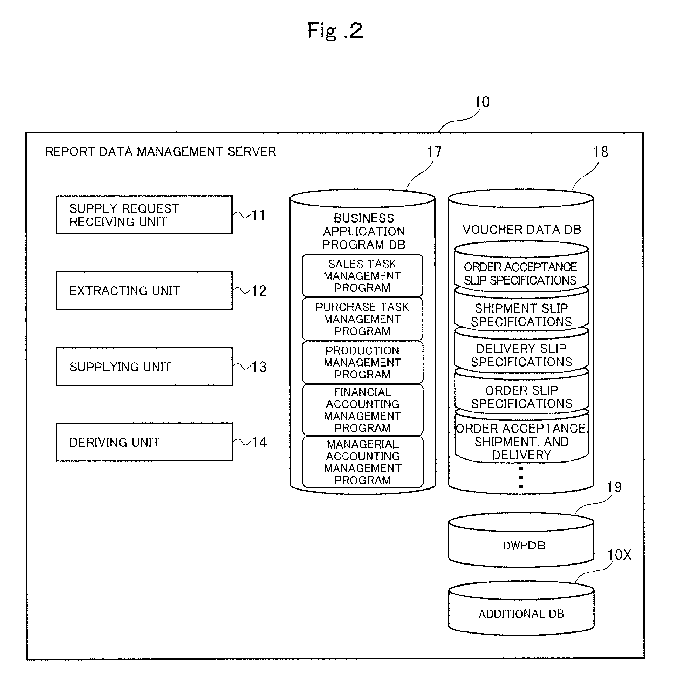

FIG. 2 is a block diagram illustrating a constitution example of the server 10. As illustrated in FIG. 2, the server 10 includes a supply request receiving unit 11, an extracting unit 12, a supplying unit 13, a deriving unit 14, a business application program DB 17, a voucher data DB 18, a DWH DB 19, and an additional DB 10X storing various types of data necessary for performing functions as an ordinary core business server (such as data used by various types of programs stored in the business application program DB 17). The additional DB 10X is a part not relating to the present invention, wherefore detailed explanation thereof is omitted herein.

The supply request receiving unit 11 has a function of receiving a request for supply of report data containing element identification information from the plurality of user terminals 30, 301 to 30N. An organization in this context refers to a group constituted by a plurality of elements, such as an enterprise and customers of an enterprise. Elements in this context refer to elements constituting an organization (organization constituent elements), such as various types of sections and offices. The method for defining the organization and elements is not limited to a particular method. However, it is preferable that an organization is expressed in a hierarchical manner based on defined plurality of elements.

The extracting unit 12 has a function of extracting report data corresponding to identification information contained in the request for supply from the voucher data DB 18. According to this embodiment, the extracting unit 12 extracts report data stored in association with elements indicated by the identification information from the voucher data DB 18.

The supplying unit 13 has a function of supplying various types of data stored in the voucher data DB 18 and the additional DB 10X in accordance with requests from predetermined external devices, such as the plurality of user terminals 30, 301 to 30N, and the enterprise resource planning system 100 according to this embodiment. Accordingly, the server 10 has a function as a core business server. In other words, the server 10 is equipped with ERP engine. According to this embodiment, the supplying unit 13 supplies voucher data extracted by the extracting unit 12 to the respective user terminals. Possible examples of the function of supplying voucher data to the user include searching function for searching various types of data, screen creating function based on data, and other functions for allowing the user to check contents of voucher data. The supplying unit 13 further has a function of transmitting arbitrary types of information desired by the user to the plurality of user terminals 30, 301 to 30N as well as voucher data. Examples of the arbitrary information include information derived from the deriving unit 14 (derived information), and information used for displaying a screen indicating the corresponding information on each of the plurality of user terminals 30, 301 to 30N (screen information).

The deriving unit 14 has a function of deriving information of a type required by the user based on voucher data extracted by the extracting unit 12. According to this embodiment, the deriving unit 14 derives information of a type indicated by type information (i.e., information indicating a type of information) when the request for supply received from each of the plurality of user terminals 30, 301 o 30N contains the type information. The type of information is not particularly limited as long as the type can be derived from voucher data. Examples of the type of information include numerals (such as sale proceeds) derived based on voucher data and a predetermined calculation equation.

The business application program DB 17 is a storage medium storing programs used for various types of business affairs. Examples of the programs stored in the business application program DB 17 include a sales task management program, a purchase task management program, a production management program, a financial accounting management program, and a managerial accounting management program.

The voucher data DB 18 is a storage medium storing various types of report data collected, sorted, or processed in other ways by various types of information processing under various types of business application programs stored in the business application program DB 17. According to this embodiment, the voucher data DB 18 stores organization data on organizations each constituted by a plurality of elements, and voucher data produced within organizations such that the organization data and the voucher data are associated with each other. The organization data in this context hierarchically defines general terms of organizations class by class. The constitution of the organization data may be arbitrarily determined as long as respective organizations are hierarchically associated in accordance with a form of a company. Examples of the organization data include such data which contains a first class (uppermost class) constituted by a company name, a second class constituted by respective sections, and a third class (lowermost class) constituted by respective groups corresponding to small divisions of each section. The voucher data produced within organizations is data indicating vouchers associated with organizations or elements constituting the organizations. The constitution of the voucher data is not limited to a particular example. Voucher data may have constitutions different for each organization and element, for example.

The voucher data DB 18 is a database which stores voucher data transferred from the core business server 110 in a predetermined format, and is constituted by a plurality of cubes. Each of the cubes stores report data on contents of the corresponding business affair produced in a business process under the corresponding business application program. For example, each of the cubes stores report data on contents of the corresponding business affair such as order acceptance slip specifications, shipment slip specifications, delivery slip specifications, and order slip specifications.

Such a cube may be equipped which stores report data on contents of each associated business affair, which contents indicate contents of corresponding associated business affairs crossing a plurality of business units as unified contents. More specifically, such a cube may be equipped which stores report data indicating contents of corresponding associated business affairs, such as order acceptance, shipment, and delivery (business affairs associated with order acceptance, shipment, and delivery) as unified contents, for example.

Accordingly, each of the cubes stores report data on contents of the corresponding business affair produced for each business unit contained in a business process, report data on contents of the corresponding associated business affair crossing a plurality of business units as unified contents for each associated business affair, and other report data in the corresponding classification classified according to contents of business affairs.

Each of the cubes stores data constituted by items generally contained in the corresponding report data. (The items include order acceptance slip header information, order acceptance slip specification information, delivery date schedule for voucher data corresponding to order acceptance slip, for example. The items are stored in such a structure that respective items are searchably associated based on keys such as slip numbers. Slip numbers include order acceptance number, order number, shipment number, in-and-out store number, invoice inquiry, bill number, account number, and others).

According to this embodiment, it is assumed that the server 10 has a function as a DWH server performing various types of functions for realizing a data warehouse, though not shown in the figures. The constitution of the server 10 for performing both the functions as an ERP engine and a DWH server allows the server 10 to supply information to an enterprise resource planning system having a different constitution (for example, an enterprise resource planning system including only a core business server, and an enterprise resource planning system including only a DWH server, as well as the enterprise resource planning system 100 having both the functions) when the information is required by the corresponding enterprise resource planning system.

Each of the user terminals 30, 301 to 30N is constituted by an information processing device, such as an iPad (registered trademark), which includes a CPU (Central Processing Unit), a ROM, a RAM, a display unit and others. (Hereinafter discussed is the user terminal 30 as an example of the user terminal.) According to this embodiment, it is assumed that the user terminal 30 is equipped with various types of applications used for handling report data, such as a web browser. In addition, the user terminal 30 has a function of defining queries (search item, search key, extraction key and the like) used for obtaining necessary report data (process flow data in this embodiment) from the server 10 in accordance with input from the user, for example, and has a function of transmitting the defined queries to the server 10. It is assumed that the user terminal 30 includes a code reader (or code reader function) for reading various types of codes such as QR code (Quick Response Code) (registered trademark).

According to this embodiment, the user terminal 30 has a function of communicating with the server 10 via the relay 20 and the communication network 40, and outputting data obtained from the server 10 to the display unit by a function of software such as a predetermined web application (web browser), for example.

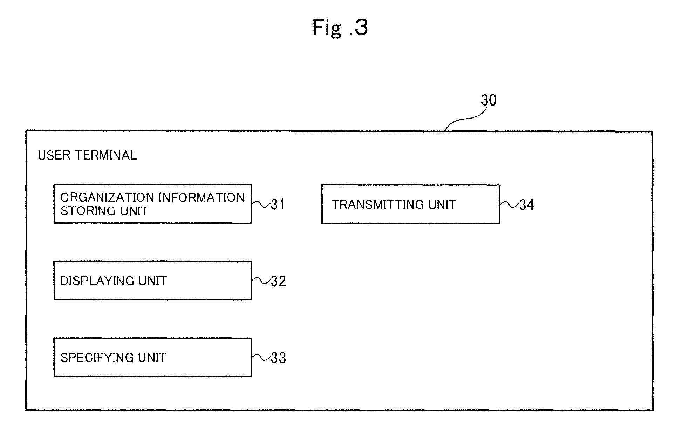

FIG. 3 is a block diagram showing a constitution example of the user terminal 30. As illustrated in FIG. 3, the user terminal 30 includes an organization information storing unit 31, a displaying unit 32, a specifying unit 33, and a transmitting unit 34.

The organization information storing unit 31 has a function of storing organization information which is information about organizations, and contains a hierarchical relationship between a plurality of elements constituting the organizations. According to this embodiment, it is assumed that the organization information include identification information (organization codes) based on which a plurality of organizations are uniquely identified, element identification information (element codes), voucher case numbers, and sale proceeds. The voucher case numbers and sale proceeds in this context are examples of voucher data. Discussed in this embodiment is an example where the user terminal 30 extracts (or refers to) organization information stored in the organization information storing unit 31 for the purpose of displaying various types of screens concerning organizations. According to this embodiment, therefore, the user terminal 30 does not require communication processing for obtaining organization information when displaying a screen showing an organization constitution, for example. The method for managing information employed by the organization information storing unit 31 is not limited to a particular method, but may be an arbitrary method as long as the use of organization information by the user terminal 30 as necessary is allowed. More specifically, when storing units of the report inquiry system 500 are all included in the server 10 for the purpose of central management of various types of information, for example, the organization information storing unit 31 may have a function of temporarily storing organization information received from the server 10. In this case, the server including all the storing units of the report inquiry system may be configured to collectively manage the "organization data" and the "organization information" according to this embodiment.

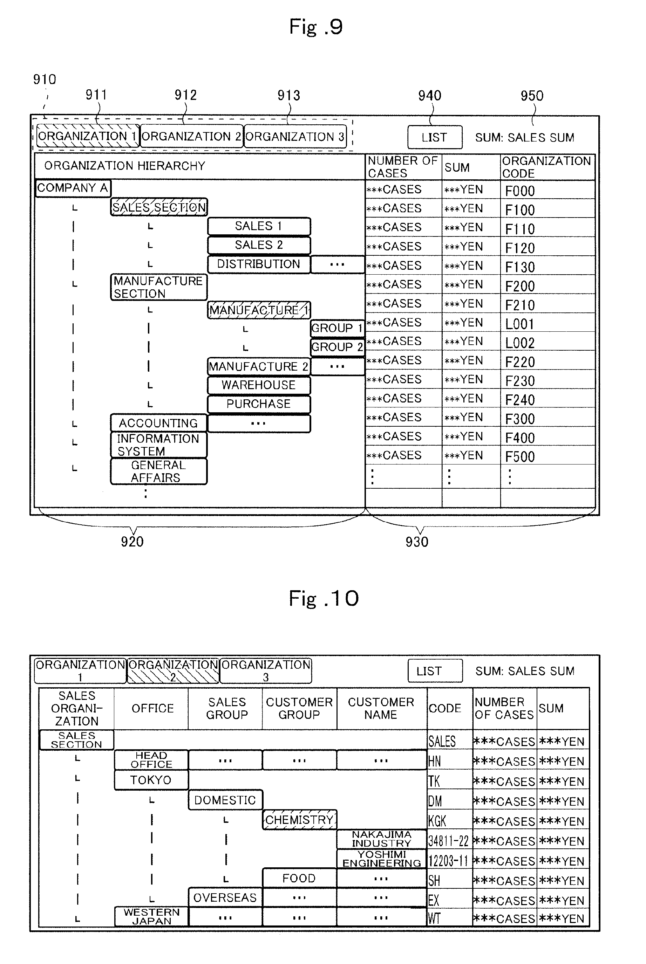

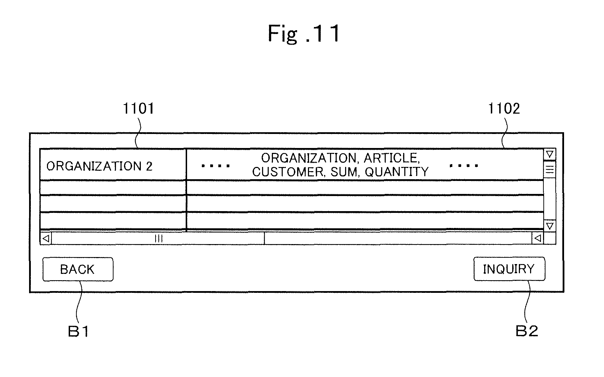

The displaying unit 32 has a function of displaying elements on a display screen of a display device in a mode in accordance with the hierarchical relationship. The mode in accordance with the hierarchical relationship in this context may be an arbitrary mode as long as the user can recognize a part or the whole of the hierarchical relationship of elements constituting an organization. According to this embodiment, the displaying unit 32 displays an organization of a display target, and elements constituting the organization on the display screen of a display device included in the displaying unit 32 in a mode in conformity with predetermined rules. Examples of the display mode will be described later (see FIGS. 10 and 11).

The specifying unit 33 has a function of specifying an element selected by the user from the elements displayed by the displaying unit 32. The method for selecting an element by the user may be an arbitrary method. For example, a plurality of elements may be selected by the user at a time. According to this embodiment, the specifying unit 33 extracts identification information about the element selected by the user from the organization information storing unit 31.

The transmitting unit 34 has a function of transmitting a request for supply of report data containing identification information about an element specified by the specifying unit 33. According to this embodiment, the transmitting unit 34 transmits to the server 10 a request for supply of information containing identification information about an element, and identification information about the user terminal 30.

Operation of the report inquiry system 500 according to this embodiment is hereinafter described with reference to the drawings. The contents of operation and processing not particularly relating to the present invention are omitted depending on cases.

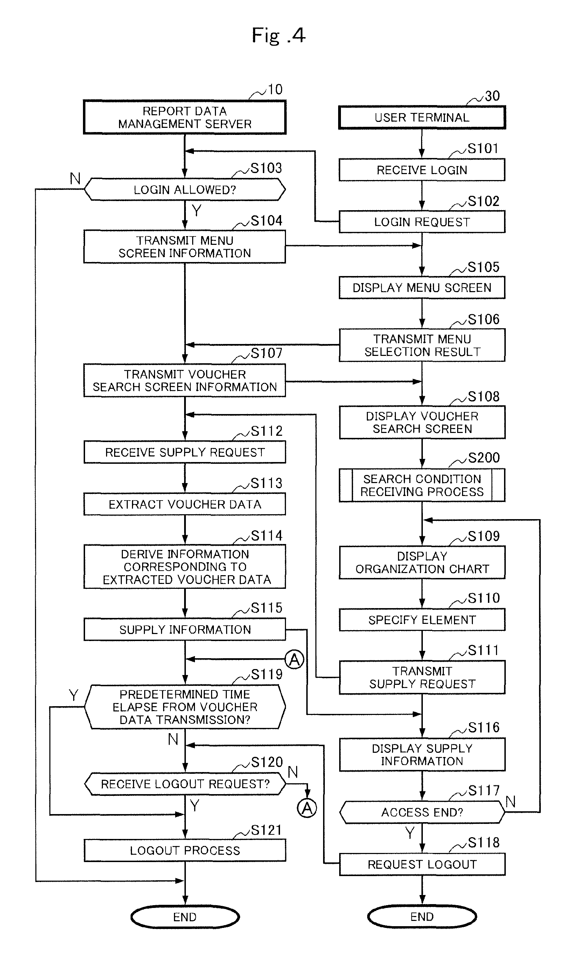

FIG. 4 is a flowchart showing an example of a voucher data supply process executed by the server 10 and others of the report inquiry system 500 according to this embodiment. Discussed herein is an example in which the server 10 supplies voucher data in accordance with a request issued from the user terminal 30 used by a user X. The orders of respective processes constituting respective flows described herein may be arbitrary orders as long as no contradiction is produced in the processing contents.

In the voucher data supply process, the user terminal 30 initially receives a login request based on login operation by the user X (step S101). Possible examples of the login operation include operation for inputting a personal identification number set beforehand. When login to the user terminal 30 is allowed, the user X is permitted to perform various types of operation for using various types of functions incorporated in the user terminal 30.

When the user X having logged in to the user terminal 30 performs predetermined login operation, the user terminal 30 accesses the server 10 to obtain a login screen, and issues a login request while designating information necessary for login (such as user ID and password set beforehand) on the login screen (step S102). The login request presents a user ID, a password, and predetermined information established beforehand for login determination (such as digital certificate issued to the user X), for example. The user X may be required to designate a language (such as Japanese) used by a group to which the user X belongs, or used on respective screens at the time of login to the server 10.

When receiving the login request, the server 10 determines whether or not to allow login (step S103). This determination is made based on the ID, password, digital certificate or the like.

When determining that login is allowable (Y in step S103), the server 10 sets the user terminal 30 to the login state. After setting the user terminal 30 to the login state, the server 10 transmits menu screen information showing a menu screen to the user terminal 30 (step S104). When determining that login is not allowable (N in step S103), the server 10 ends the voucher data supply process without setting the user terminal 30 to the login state. In case of determination that login is not allowable, the server 10 executes a process for notifying the user terminal 30 about this fact.

After receiving the menu screen information, the user terminal 30 displays a menu screen corresponding to the received menu screen information on the display unit included in the user terminal 30 (step S105).

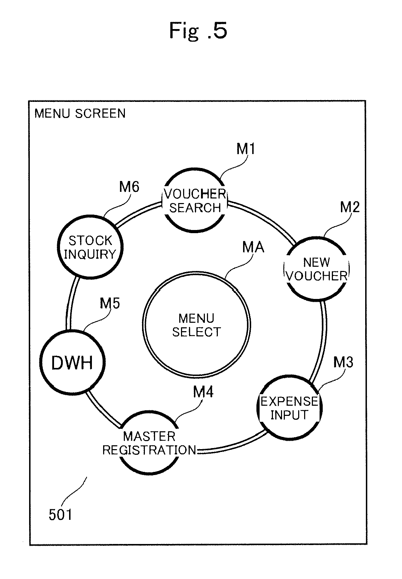

FIG. 5 is a figure illustrating an example of the menu screen. As illustrated in FIG. 5, the menu screen contains a menu arrangement circle display area 501 which displays a menu arrangement circle MC where menu buttons M1 to M6 are arranged substantially in a circle. Each of the menu buttons M1 to M6 represents the corresponding name of the selectable plurality of menus. In addition, the menu arrangement circle display area 501 contains a title display area MA disposed at the central area of the circle formed by the menu arrangement circle MC as illustrated in FIG. 5. The title display area MA displays a title of the menu arrangement circle MC. The menu buttons M1 to M6 are constituted by the voucher search button M1 pressed when searching a voucher, the new voucher button M2 pressed when creating a new voucher, the expense input button M3 pressed when inputting expense, the master registration button M4 pressed when registering a master, the DWH button M5 pressed when registering data in the DWH DB 19 or executing other like processing, and the stock inquiry button M6 pressed when inquiring stock information.

The user X presses any of the menu buttons M1 to M6 by touch operation (contact by the finger) on the menu screen displayed on the display unit of the user terminal 30 equipped with a touch panel. According to this embodiment, it is assumed that the voucher search button M1 is pressed. The processes executed at the time of press of the other menu buttons M2 to M6 are not discussed herein.

When the voucher search button M1 is pressed on the menu screen, the user terminal 30 transmits the press condition of the voucher search button M1 to the server 10 as a menu selection result (step S106).

After receiving the menu selection result indicating the press condition of the voucher search button M1, the server 10 transmits to the user terminal 30 voucher search screen information indicating a voucher search screen for designating voucher search conditions (step S107).

After receiving the voucher search screen information, the user terminal 30 displays a voucher search screen corresponding to the received voucher search screen information on the display unit included in the user terminal 30 (step S108), and executes a search condition receiving process (step S200).

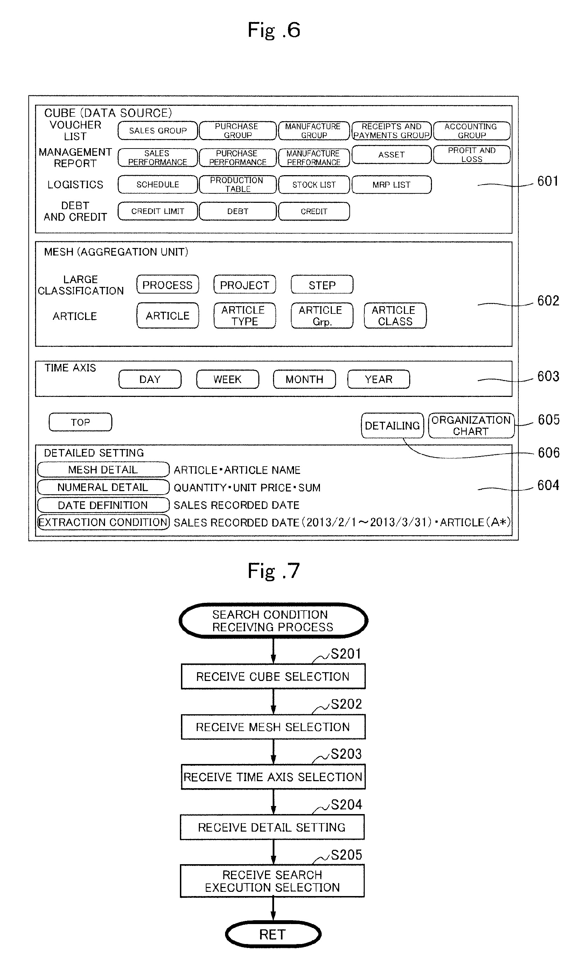

FIG. 6 is a figure illustrating an example of the voucher search screen. As illustrated in FIG. 6, the voucher search screen contains a cube selecting area 601 for selecting a cube or a cube group corresponding to a search target, a mesh selecting area 602 for selecting a mesh indicating an item or an item group of report data determined beforehand as an aggregation unit, a time range selecting area 603 for selecting a time axis (time range) determined as an aggregation unit, a detail setting area 604 for setting detailed search conditions or aggregation conditions, an organization chart button 605, and a detailing button 606 pressed for detailing. According to this embodiment, the respective screens may be shown in non-uniform sizes depending on cases to allow easy understanding of the description in conjunction with the figures.

The "detailing" in this context refers to a process for adding an identification number (such as slip number), which number is uniquely given to each of voucher data, to a list of a search result so as to identify an original voucher (voucher data not aggregated) in the data shown in the list of the search result aggregated for each mesh. According to this embodiment, the detailing function thus provided allows easy checking of data requiring detailed checking (abnormal values, data exhibiting considerable deviation between planning and performance) based on original vouchers in conjunction with analysis of the list of the search result aggregated for each mesh.

As illustrated in FIG. 6, the cube selecting area 601 contains a sales group selection button for selecting cubes storing report data on a sales group, a purchase group selection button for selecting cubes storing report data on a purchase group, a manufacture group selection button for selecting cubes storing report data on a manufacture group, a receipts and payments group selection button for selecting cubes storing report data on a receipts and payments group, an accounting group selection button for selecting cubes storing report data on an accounting group, and other various types of selection buttons.

As illustrated in FIG. 6, the mesh selecting area 602 contains various types of selection buttons for selecting certain types of meshes (large classification meshes and article meshes concerning articles in this embodiment). The plurality of selection buttons contained in the mesh selecting area 602 may be selected at a time.

As illustrated in FIG. 6, the time range selecting area 603 contains various types of selection buttons for selection based on time axes of day, week, month, and year. The user terminal 30 may be configured to display a calendar screen showing a calendar corresponding to the time axis selected by the user X.

The detail setting area 604 contains a mesh detail button pressed when setting mesh details to narrow search conditions for searching the mesh selected in the mesh selecting area 602, a numeral detail button pressed when setting detailed search conditions for searching respective numeral items in voucher data, a date definition button pressed when setting detailed search conditions for searching respective date items in voucher data, and an extraction condition button pressed when setting other detailed search conditions.

In this case, the chief selection targets for determining search conditions are constituted by the three types of conditions as cube, mesh, and time axis. Accordingly, the selection targets are presented in a compact manner as illustrated in FIG. 6. When the display screen size of the display device included in the user terminal 30 permits, all the selection targets are displayed on one screen. The selection items provided in the respective selecting areas are presented by way of example only. Other selection items may be contained in the respective selecting areas.

The user X selects any of the cubes provided in the cube selecting area 601 by touch operation on the voucher search screen, and selects one or more meshes from the meshes provided in the mesh selecting area 602.

More specifically, the user X presses any of the selection buttons provided in the cube selecting area 601 to select a cube as the search target. In addition, the user X presses one or more selection buttons of the selection buttons provided in the mesh selecting area 602 to determine which report item is to be searched and extracted in the report data corresponding to the search target (determined by cube selection).

Then, the user X selects any of the time axes provided in the time range selecting area 603 on the voucher search screen as necessary. More specifically, the user X presses any of the selection buttons provided in the time range selecting area 603 to select the time axis for aggregation.

FIG. 7 is a flowchart showing an example of the search condition receiving process executed by the user terminal 30. In the search condition receiving process, the user terminal 30 receives touch operation from the user X for selecting a cube (step S201), receives touch operation from the user X for selecting one or more meshes (step S202), and receives touch operation from the user X for selecting a time axis (step S203).

Reception of mesh selection may be prohibited when the user X desires as such, for example. In this case, the user terminal 30 may be configured to proceed to the subsequent step even when mesh selection is not completed. In addition, the mesh selecting area 602 may be eliminated from the voucher search screen.

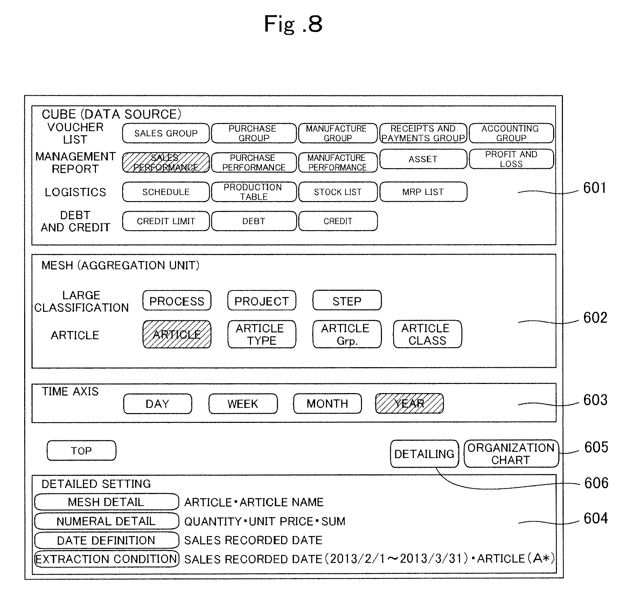

FIG. 8 is a figure illustrating an example of the voucher search screen where a cube and others have been selected. According to the example shown in FIG. 8, sales performance is selected as a target cube, an article is selected as a target mesh, and year is selected as a target time axis.

According to this embodiment, the user X is allowed to enter further detailed setting as necessary by pressing any of the mesh detail button, the numeral detail button, the date definition button, and the extraction condition button provided in the detail setting area 604. When receiving detail setting operation from the user X, the user terminal 30 displays a screen (detail setting screen, not shown) corresponding to the received detail setting operation, and receives detail setting from the user X (step S204).

The detail setting is arbitrarily set based on the desire of the user X, wherefore processing or operation concerning the detail setting may be omitted. When the detail setting is executed, the screen returns to the voucher search screen (see FIG. 8).

The organization chart button 605 is a virtual button for receiving a request for displaying an organization chart. After receiving selection and setting of the search conditions on the voucher search screen, the user terminal 30 displays an organization chart in accordance with selection of the organization chart button 605 (step S109). According to this embodiment, the user terminal 30 displays an organization chart display screen containing an organization chart. The occasion for displaying the organization chart (including timing, conditions, and period) is not limited to this example. It is preferable that the user terminal 30 is configured to display an organization on an occasion desired by the user for selecting the organization (or elements constituting the organization). Other possible examples of occasions for displaying the organization chart by the user terminal 30 include an occasion before receiving input of search conditions for searching report data, an occasion after selection of report data by the user, and other various occasions.

FIG. 9 is a figure illustrating an example of the organization chart display screen. As illustrated in FIG. 9, the organization chart display screen contains an organization button display area 910, an organization chart display area 920, a voucher data display area 930, a list display button 940, and an item display area 950.

The organization button display area 910 is an area for receiving selection of an organization from the user X. According to this embodiment, the user terminal 30 displays a plurality of organization buttons 911 to 913 indicating three organizations ("organization 1", "organization 2", and "organization 3" in FIG. 9) in the organization button display area 910. The number of organizations to be displayed in the organization button display area 910 is not limited to a particular number. The plurality of organizations displayed in the organization button display area 910 may be organizations having a relationship defined by the user, for example. In the case of display of the plurality of organizations having a relationship defined by the user, the user terminal 30 may be configured to display in the organization button display area 910 organization buttons corresponding to an organization (organization to which the user X belongs, or self-organization), customers, and suppliers.

FIG. 10 is a figure illustrating another example of the organization chart display screen. When the organization button 912 in FIG. 9 is selected by the user X, for example, the user terminal 30 displays the condition of selection of the organization button 912 in a mode recognizable for the user X (i.e., displays in an identifiable mode), and displays an organization chart of an organization corresponding to the organization button 912, and report data corresponding to the organization chart.

The organization chart display area 920 is an area for displaying an organization chart showing a constitution of an organization. The user terminal 30 displays an organization chart of an organization corresponding to an organization button selected by the user X in the organization chart display area 920.

The organization chart in this context is a chart representing the plurality of elements constituting an organization (organization constituent elements) in an arrangement corresponding to the hierarchical relationship of the plurality of elements. According to the organization chart displayed in the organization chart display area 920 in FIG. 9, for example, an element "company A" lies in the upper class with respect to an element "sales section", elements "manufacture section" and "accounting" lie in the same class, and elements "sales 1" and "sales 2" lie in the lower class.

The voucher data display area 930 is an area for displaying voucher data (or information derived from voucher data). The user terminal 30 displays voucher data in a mode in accordance with an element selection state determined by the user X. According to this embodiment, the user terminal 30 disposes an image showing voucher data in the same line as the line of the corresponding organization constituent element constituting the organization chart. The user X displays voucher data in the voucher data display area 930 based on obtaining voucher data from the server 10 (for example, based on reception of information supply from the server 10 by a process discussed below).

The list display button 940 is a virtual button for receiving a request for displaying a screen (list display screen) showing a list of voucher data corresponding to an organization selected by the user X (or organization in the course of selection by the user X). The user terminal 30 displays a list display screen when determining that the user terminal 30 has received selection of the list display button 940.

FIG. 11 is a figure illustrating an example of the list display screen. As illustrated in FIG. 11, the list display screen contains an organization name display area 1101 displaying an organization name, a voucher data display area 1102 displaying voucher data, a back button B1 pressed when returning to the previous screen, and an inquiry button B2.

The inquiry button B2 is a virtual button for receiving a request for starting a predetermined inquiry process. When receiving selection of the inquiry button B2, the user terminal 30 executes a predetermined inquiry-associated process. The explanation of the inquiry process is omitted herein.

The item display area 950 is an area for displaying items (or names of information derived from voucher data) displayed in the voucher data display area 930 as data contained in the voucher data.

The operation of the organization chart display screen (i.e., screen transition) according to this embodiment is detailed herein with reference to FIG. 9. When receiving selection of the element "sales section", the user terminal 30 displays elements (elements in the lower class) "sales 1", "sales 2", and "distribution" associated with the selected element "sales section" corresponding to the upper class. Accordingly, these three elements in the lower class are not displayed in the organization chart until the element "sales section" is selected by the user X. The user terminal 30 displays the elements in the state of selection by the user X (elements in the selected state) in an identifiable manner. According to this embodiment, the user terminal 30 may display elements in the selected state (such as elements corresponding to hatched portions in FIG. 9) in a different color (such as orange) from the color of the other elements, for example.

In addition, when receiving selection of the element "distribution" corresponding to the lower element of the element "sales section" in the condition of display of the element "distribution", the user terminal 30 also displays the lower elements of the corresponding organization. Furthermore, according to this embodiment, the user terminal 30 cancels the selected state of the "sales section" corresponding to the upper element of the selected element "distribution". In this case, the user terminal 30 changes the color of the element after canceling of the selected state to the same color (such as white) as the color of the other elements not in the selected state.

When the element in the selected state is again selected by the user, the user terminal 30 closes the display of the element having a predetermined hierarchical relationship with the again selected element. For example, when the element "sales section" is selected in the condition shown in FIG. 9, the user terminal 30 cancels the selected state of the corresponding element, closes the display of the lower elements "sales 1", "sales 2", and "distribution", and displays a predetermined image (such as "...") on the right side of the corresponding element. The display of the predetermined image (lower element notifying image) by the user terminal notifies the user about the presence of the lower elements.

When receiving selection of the upper element, the user terminal 30 cancels the selected state of the lower element of the corresponding upper element. For example, when the element "manufacture section" is selected in the condition shown in FIG. 9, the user terminal 30 sets the corresponding element to the selected state, and cancels the selected state of the lower element "manufacture 1" of the corresponding element. In this case, the user terminal 30 closes the display of the lower elements "group 1" and "group 2" of the element "manufacture 1" after canceling of the selected state.

The user terminal 30 displays in the voucher data display area 930 voucher data corresponding to the elements in the selected state, and the elements kept displayed. The occasion at which the user terminal obtains voucher data is not limited to a particular occasion. For example, voucher data on a plurality of organizations may be obtained periodically, or voucher data corresponding to an element selected by the user X may be obtained every time the element selected by the user X is specified. Discussed hereinbelow is an example in which the user terminal 30 obtains voucher data in accordance with specification of an element selected by the user X.

After displaying an organization chart in the voucher data supply process (see FIG. 4), the user terminal 30 specifies an element (step S110). According to this embodiment, the user terminal 30 specifies an element selected by the user X. The method for specifying the element selected by the user X is not limited to a particular method. For example, the element may be specified based on touch operation, or operation using a mouse or a keyboard.

After specifying the element, the user terminal 30 transmits a request for supply of information to the server 10 (step S111). According to this embodiment, the user terminal 30 creates a request for supply containing identification information about the specified element, and search conditions received in the search condition receiving process, and transmits the created request for supply to the server 10.

The server 10 receives the request for supply from the user terminal 30 (step S112). Login determination for allowing login of the user terminal 30 may be made based on the condition in which the server 10 has received the request for supply containing identification information from the user terminal 30 without the necessity of re-determination of login of the user terminal 30.

After receiving the request for supply, the server 10 extracts voucher data corresponding the identification information contained in the received request for supply from the voucher data DB 18 (step S113). According to this embodiment, the server 10 extracts voucher data corresponding to the identification information contained in the received request for supply, and meeting the search conditions contained in the request for supply.

After extracting voucher data, the server 10 derives information contained in the extracted voucher data (step S114). According to this embodiment, the server 10 derives information of a type corresponding to type information from the extracted voucher data when the corresponding type information is contained in the request for supply received from the user terminal 30. When type information is not contained in the request for supply, the server 10 may be configured to extract a predetermined type of information, or transmit the whole voucher data to the user terminal 30. In this case, the process for deriving information is completed on the server side, whereby the processing load on the user terminal 30 decreases.

After deriving information, the server 10 supplies the derived information to the user terminal 30 (step S115). According to this embodiment, the server 10 transmits the derived information to the user terminal 30. The method for supplying the information from the server 10 is not limited to a particular method. For example, information which indicates a screen showing derived information may be created, and transmitted to the user terminal 30.

After receiving the information (supply information) supplied from the server 10, the user terminal 30 displays the received supply information on a display screen of the display device included in the user terminal 30 (step S116). According to this embodiment, the user terminal 30 updates the organization chart display screen such that a part or the whole of the received supply information is displayed on the display screen.

After displaying the supply information, the user terminal 30 determines whether or not to end the access to the server 10 (step S117). When operation for ending the access such as operation for ending a browser is performed by the user X, for example (Y in step S117), the user terminal 30 issues a request for logout to the server 10 (step S118). When operation for continuing the access is performed (N in step S117), the user terminal 30 shifts to a process in step S109 and displays the organization chart. According to this embodiment, therefore, the user terminal 30 is allowed to display the organization chart while maintaining search conditions other than the organization or organization constituent elements.

On the other hand, after supplying information to the user terminal 30 in the process in step S115, the server 10 starts measuring the period of no information exchange between the server 10 and the user terminal 30 (standby time), and monitors whether or not the standby time exceeds (reaches) a predetermined time (such as 5 minutes, 10 minutes, and 30 minutes) (step S119).

When receiving a request for logout during measuring of the standby time (Y in step S120), the server 10 stops measuring of the standby time, executes a logout process for canceling the login state (step S121), and ends the process herein.

When determining that the standby time exceeds the predetermined time (Y in step S119), the server 10 ends measuring of the standby time, executes a logout process for canceling the login state (step S121), and ends the process herein.

As described above, the report data management server 10 according to the foregoing embodiment is a server for operation of ERP, and provides report data produced for each business affair in a business process to a user terminal via a communication network in accordance with a request issued from the user terminal used by a user. The server 10 is configured to include a report data storing unit (such as voucher data DB 18) storing organization data on an organization constituted by a plurality of elements, and report data (such as voucher data) produced within the organization such that the organization data and the report data are associated with each other, receive a request for supply of report data containing identification information of an element from the user terminal 30 receiving selection of the element from the user based on hierarchical display of the plurality of elements (such as step S112), extract from the report data storing unit report data corresponding to identification information contained in the request for supply (information based on which the element is uniquely identified) (such as step S113) in accordance with reception of the request for supply, and supply the extracted report data to the user terminal 30 (such as step S115). This constitution supplies data desired by the user by simplified processing in the ERP system.

More specifically, this constitution uses the user terminal which supplies to the user a dedicated screen for designating a search target organization (more specifically, organization constituent element) of report data. Accordingly, this constitution allows the user to obtain supply of data desired by the user by simplified processing in accordance with operation received on the dedicated screen.

According to the foregoing embodiment, the user terminal 30 is configured to include the organization information storing unit 31 storing organization information which is information about the organization, and contains a hierarchical relationship between the plurality of elements. The user terminal 30 is configured to display the elements on the display screen of the display device in a mode corresponding to the hierarchical relationship (such as step S109), specify an element selected by the user X from the displayed elements in accordance with operation by the user X (such as step S110), and transmit a request for supply of report data (such as voucher data) containing identification information about the specified element (such as step S111). The server 10 is configured to receive the request for supply transmitted from the user terminal 30 (step S112). Accordingly, the load on the user decreases at the time of search of report data in consideration of the organization constitution or other processing.

According to the foregoing embodiment, the user terminal 30 is configured to display report data supplied by the server 10 in a mode in accordance with a specified state of the element (such as a mode in accordance with the selected state of the organization constitution element by the user X, see FIGS. 9 and 10). Accordingly, report data is displayed in a mode in correspondence with the organization constitution.

According to the foregoing embodiment, the user terminal 30 is configured to display an element having a predetermined hierarchical relationship with the specified element (display an additional lower element of the element corresponding to the received selection by the user X, for example). In this case, a constituent element more usable for the user in the elements of the organization constitution is given priority for display. More specifically, in starting the use of the system by the user, for example, the display screen may be updated such that the display range increases or shifts in accordance with operation by the user without display of the whole organization constitution.

According to the foregoing embodiment, the user terminal 30 is configured to close display of an element having the predetermined hierarchical relationship with a re-selected element which corresponds to the specified element again selected by the user X (stop display of an image indicating an element name, for example, see FIGS. 9 and 10). This constitution avoids deterioration of visibility caused by excessive enlargement of an organization chart displayed on a display screen.

According to the foregoing embodiment, the user terminal 30 is configured to establish the relationship such that the specified element (i.e., element selected by the user X) is set to an upper class element. This constitution provides for the user such a system which searches necessary report data while sequentially shifting to the lower classes.

According to the foregoing embodiment, the user terminal 30 is configured to include the organization information storing unit 31 which stores information about a plurality of organizations, specify an organization selected by the user from the plurality of organizations based on operation by the user X, and display the elements of the specified organization in a mode corresponding to the hierarchical relationship (see FIGS. 9 and 10, for example). This constitution allows collective management of reports on the plurality of organizations. The items of the classes may be arbitrarily defined by the system manager or the user of the user terminal. In this case, a certain organization may be managed as an element of another organization, for example.

According to the foregoing embodiment, the server 10 is configured to derive information of a type corresponding to the extracted report data when the request for supply received from the user terminal 30 contains type information indicating the type of the information (such as step S114), and supply the derived information to the user terminal 30 (such as step S115). Accordingly, the processing load on the user terminal decreases.

While not particularly described in the foregoing embodiment, the server 10 executes the foregoing respective processes (see FIG. 4) under a processing program (report data management program) stored in a storage medium included in the server 10. In addition, each of the user terminals 30, 301 to 30N executes the foregoing respective processes (see FIGS. 4 and 7) under a processing program (report data management program) stored in a storage medium included in each of the user terminals 30, 301 to 30N.

The constitution of the report inquiry system 500 is not limited to the foregoing constitution. A part or all of the functions included in either the user terminal 30 or the server 10 of the report inquiry system 500 may be included in the other of the user terminal 30 and the server 10. More specifically, a part or all of the processes described as processes executed by the user terminal 30 may be executed by the server 10, or a part or all of the processes executed by the server 10 may be executed by any of the plurality of user terminals 30, 301 to 30N. In addition, a part or all of the information stored in a storing unit of the server 10 may be stored in any of the plurality of user terminals 30, 301 to 30N.

The present invention is useful in providing data desired by a user by simplified processing in a business system (ERP system) providing information on reports.

## Claims

1. A report data management server which is a server for operation of ERP, and provides report data produced for each business affair in a business process to a user terminal via a communication network in accordance with a request issued from the user terminal used by a user, comprising:
a report data storing unit storing organization data on an organization constituted by a plurality of elements, and report data produced within the organization such that the organization data and the report data are associated with each other;
a supply request receiving unit receiving a request for supply of report data containing identification information of an element from the user terminal receiving selection of the element from the user based on hierarchical display of the plurality of elements;
an extracting unit extracting from the report data storing unit report data corresponding to the identification information contained in the request for supply in accordance with reception of the request for supply by the supply request receiving unit; and
a supplying unit supplying the report data extracted by the extracting unit to the user terminal.

2. The report data management server according to claim 1, wherein
the user terminal includes
an organization information storing unit storing organization information which is information about the organization, and contains a hierarchical relationship between the plurality of elements,
a displaying unit displaying the elements on a display screen of a display device in a mode corresponding to the hierarchical relationship,
a specifying unit specifying an element selected by the user from the elements displayed by the displaying unit in accordance with operation by the user, and
a transmitting unit transmitting a request for supply of report data containing identification information about the element specified by the specifying unit, and
the supply request receiving unit receives the request for supply transmitted from the transmitting unit of the user terminal.

3. The report data management server according to claim 2, wherein the displaying unit of the user terminal displays report data supplied by the supplying unit in a mode in accordance with a specified state of the element by the specifying unit.

4. The report data management server according to claim 2, wherein the displaying unit of the user terminal displays an element having a predetermined hierarchical relationship with the element specified by the specifying unit.

5. The report data management server according to claim 4, wherein the displaying unit of the user terminal closes display of an element having the predetermined hierarchical relationship with a re-selected element which corresponds to the element specified by the specifying unit and again selected by the user.

6. The report data management server according to claim 4, wherein the predetermined hierarchical relationship is a relationship which sets the element specified by the specifying unit to an upper class element.

7. The report data management server according to claim 2, wherein
the organization information storing unit of the user terminal stores information about a plurality of organizations,
the specifying unit of the user terminal specifies an organization selected by the user from the plurality of organizations based on operation by the user, and
the displaying unit of the user terminal displays the elements of the organization specified by the specifying unit of the user terminal in a mode corresponding to the hierarchical relationship.

8. The report data management server according to claim 1, further comprising:
a deriving unit deriving information of a type corresponding to the report data extracted by the extracting unit when the request for supply contains type information indicating the type of the information, wherein the supplying unit supplies to the user terminal information derived by the deriving unit.

9. A non-transitory computer-readable medium including a report data management program which allows operation of ERP, and allows a report data management server to provide report data via a communication network in accordance with a request issued from a user terminal used by a user, under the program the report data management server which includes a report data storing unit storing organization data on an organization constituted by a plurality of elements, and report data produced within the organization such that the organization data and the report data are associated with each other executes
a supply request receiving process receiving a request for supply of report data containing identification information of an element from the user terminal receiving selection of the element from the user based on hierarchical display of the plurality of elements,
an extracting process extracting from the report data storing unit report data corresponding to the identification information contained in the request for supply in accordance with reception of the request for supply in the supply request receiving process, and
a supplying process supplying the report data extracted in the extracting process to the user terminal.

10. A report data management device which is a device for operation of ERP, and provides report data produced for each business affair in a business process in accordance with a request from a user, comprising:
a report data storing unit storing organization data on an organization constituted by a plurality of elements, and report data produced within the organization such that the organization data and the report data are associated with each other;
a displaying unit displaying the elements in a hierarchical manner on a display screen of a display device;
a specifying unit specifying an element selected by the user from the elements displayed by the displaying unit in accordance with operation by the user; and
an extracting unit extracting from the report data storing unit report data corresponding to an element specified by the specifying unit,
wherein the displaying unit displays report data extracted by the extracting unit.
